# NEUE EUROPÄISCHE PATENTSCHRIFT

(11) **EP 1 300 087 B2**
(45) Veröffentlichungstag und Bekanntmachung des Hinweises auf die Entscheidung über den Einspruch: **19.06.2013**
(45) Hinweis auf die Patenterteilung: 19.07.2006
(21) Anmeldenummer: 02400049.9
(22) Anmeldetag: 11.04.1998
(51) Int. Cl.: A23P 1/10, A23G 1/21, A23G 3/02, A23K 1/18, A23N 17/00

(54) **Verfahren zum Herstellen von schalenförmigen Verzehrgütern**
Process for making shell-shaped consumable items
Procédé de fabrication d'articles de consommation pourvus d'une coquille

(30) Priorität: 25.07.1997 DE 19732036; 17.05.1997 DE 19720844
(43) Veröffentlichungstag der Anmeldung: 09.04.2003
(62) Teilanmeldung aus: 98919256.2
(73) Patentinhaber: KMB Produktions AG, 8552 Felben (CH)
(72) Erfinder: Knobel, Josef, 5586 Wigoltingen (CH)
(74) Vertreter: Weiss, Peter

(56) Entgegenhaltungen:
- EP-A- 0 715 813
- EP-A- 0 914 774
- EP-A- 0 914 776
- EP-A1- 0 589 820
- WO-A-94/12046
- WO-A-98/21977
- DE-A- 19 535 292
- DE-C- 860 739
- GB-A- 207 974
- GB-A- 223 245
- SU-A1- 616 053

## Beschreibung

Die vorliegende Erfindung betrifft ein Verfahren zum Herstellen von Verzehrgütern mit einer äusseren Schale aus einer fliessfähigen Masse, welche in eine Form eingefüllt wird, wobei in die Form ein temperierter Stempel eintaucht und die Masse fliesspresst.

Bei einer Reihe von Verzehrgütern ist es notwendig, eine äussere Schale aus einer fliessfähigen Masse herzustellen, wobei diese fliessfähige Masse in einen Hohlraum eingepresst wird und dort durch entsprechende Temperierung erstarrt und so eine fest Form annimmt. Beispielsweise gilt dies für Hundefutter, wenn eine äussere Fettschale hergestellt wird, die ein Fleischgemisch od. dgl. umhüllt. Dabei wird erwärmtes, fliessfähiges Fett in eine Form gebracht und durch ein Druckstempel schalenartig ausgestaltet, wobei der Stempel gekühlt ist und beim Formvorgang die fettartige Schale erstarrt.

In erster Linie, und darauf soll sich die vorliegende Erfindung besonders beziehen, gilt dieser Vorgang für die Herstellung einer Schokoladenschale, die später mit einer Füllung gefüllt wird. Beispielsweise ist aus der GB-PS 207 974 bekannt, einen von einem Kühlmittel durchströmten Stempel in die Schokoladenmasse einzutauchen, wobei das Eintauchen in einem solchen Masse erfolgt, dass die entstehende Schokoladenschale die gewünschte Dicke erhält. Damit der Stempel wieder von der Schokoladenmasse getrennt werden kann, ist der Stempel mit einem entsprechenden Trennmittel versehen, so dass die Schokoladenmasse nicht an der Oberfläche des Stempels haften bleibt.

Aus dem Gebrauchsmuster 93 21 186 ist ferner bekannt, dass der Stempel bzw. die Vorsprünge oder Kühlkörper an dem Stempel bis auf eine Temperatur unter 0° C abgekühlt werden und dann in die Schokoladenmasse eintauchen. Durch das Abkühlen entsteht auf der Oberfläche des Stempels eine hauchdünne Eisschicht, da der Taupunkt der Umgebungsluft über der Werkzeugtemperatur liegt, die den Stempel von der Schokoladenmasse trennt. Durch die dünne Eisschicht kann es aber zur Fleckenbildung auf der Innenseite des Verzehrgutes kommen, was wiederum unerwünscht ist.

Das gleiche gilt auch für den Vorschlag nach der EP 0 715 813, wonach das Stempelelement mindestens auf eine solche Temperatur heruntergekühlt ist, dass der Taupunkt, der die Schokoladenmasse umgebenden Atmosphäre erreicht bzw. unterschritten wird. Auch hierbei beschlägt die der Schokoladenmasse zugewandte Fläche des Stempelelementes vor dem Kontakt mit der Schokoladenmasse.

Aus der WO 94/12046 ist bekannt, einen Stempel aus zwei Teilen herzustellen. Ein äusserer Teil besteht aus Aluminium, ein innerer Einsatz aus einem Kunststoffmaterial, welches eine geringere Wärmeleitfähigkeit aufweist.

Der vorliegenden Erfindung liegt die Aufgabe zugrunde, ein Verfahren der o.g. Art zu entwickeln, bei dem die Wärmeübertragung zwischen Stempel und Verzehrgut wesentlich verbessert ist.

Zur Lösung dieser Aufgabe führt, dass die mit der äusseren Schale in Kontakt kommenden Flächen des Stempels beschichtet werden, wobei die Beschichtung aus Silber oder eines Silberlegierung besteht.

Besonders wirkungsvoll kann das Verfahren durchgeführt werden, wenn der Stempel und/oder die Form aus sehr wärmeleitfähigem Werkstoff hergestellt ist/sind. Hierbei bietet sich vor allem Kupfer an, welches eine hohe Wärmeleitfähigkeit besitzt. Verbessert wird das Verfahren nochmals, wenn der Grundkörper von Stempel und/oder Form aus Kupfer besteht und die mit der Masse des Verzehrgutes in Kontakt kommenden Flächen mit dem Silber oder der Silberlegierung beschichtet sind. Silber hat nochmals eine höhere Wärmeleitfähigkeit als Kupfer, so dass letztendlich die Wärmeleitfähigkeit an der Oberfläche des Stempels zwischen derjenigen von Kupfer und Silber liegt.

Silber hat ferner den Vorteil, dass die Masse des Verzehrgutes nicht haften bleibt und zwar auch dann nicht, wenn der Taupunkt der das Verzehrgut umgebenden Atmosphäre unter der Temperatur des Stempels gehalten wird. Dadurch wird ein Beschlagen des Stempels bzw. der Schokoladenmasse zugewandten Flächen des Stempels vermieden, so dass es zu keiner Fleckenbildung kommt. In der Praxis hat sich aber herausgestellt, dass dennoch ein Lösen des Stempels von der Schokoladenmasse sehr gut gelingt, da mit relativ tiefen Temperaturen gefahren wird. Es kommt aber weder zu einer Eisbildung noch zu einer Kondenswasserbildung am Werkzeug.

Obwohl die vorliegende Erfindung besonders gut zur Herstellung von Schokoladenschalen geeignet ist, soll sie nicht darauf beschränkt sein, da auch andere Verzehrgüter sehr günstig mit diesem Verfahren hergestellt werden können.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Frontansicht einer Vorrichtung zum Herstellen von Verzehrgütern;
Figur 2 eine Seitenansicht der Vorrichtung gemäss Figur 1;
Figur 3 einen Querschnitt durch ein erfindungsgemässes Werkzeug zum Herstellen von Verzehrgütern.

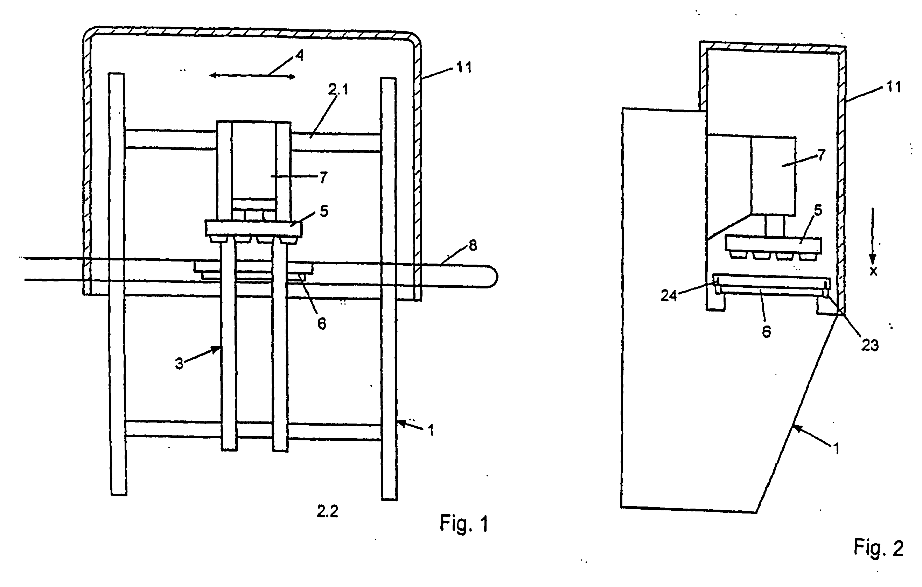

Gemäss Figur 1 weist eine erfindungsgemässe Vorrichtung zur Herstellung von Verzehrgütern einen Maschinenrahmen 1 auf, in dem sich zwei horizontale Führungssäulen 2.1 und 2.2 befinden. An diesen Führungssäulen 2.1 und 2.2 wird ein Schlitten 3 in Richtung des Doppelpfeiles 4 geführt, wobei dieser Schlitten 3 einen Stempel 5 und einen Tisch 6 ebenfalls in Richtung des Doppelpfeiles 4 führt. Der Stempel 5 ist an einer Hubeinrichtung 7 angeordnet und kann in Hubrichtung x (siehe Figur 2) bewegt werden.

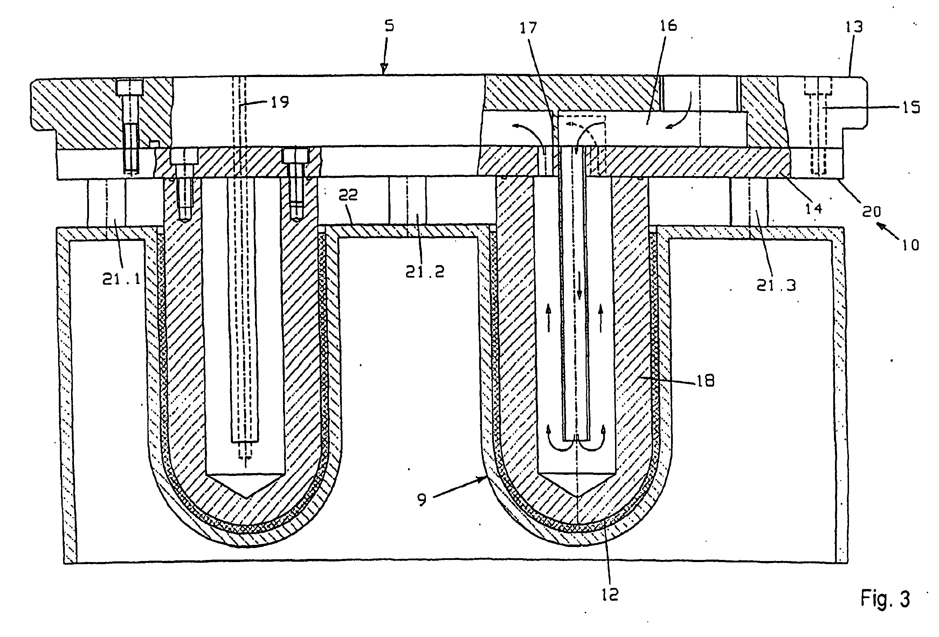

Über den Tisch 6 läuft ein Endlosband 8, auf welches eine in Figur 3 gezeigte Form 9 aufgelegt werden kann. Form 9 bildet zusammen mit dem Stempel 5 ein Werkzeug 10 zur Herstellung von Verzehrgütern. Dieses Werkzeug 10 und ein grosser Teil des Schlittens 3 befindet sich innerhalb eines geschlossenen Gehäuses 11.

Gemäss Figur 3 weist die Form 9 Hohlräume 12 auf, die in Gebrauchslage mit einer Masse zum Herstellen des Verzehrgutes gefüllt werden. Dementsprechend besitzt der Hohlraum 12 auch eine Form, die der gewünschten äusseren Form des Verzehrgutes entspricht.

Der Stempel 5 weist zwei Platten 13 und 14 auf, die über Schrauben 15 miteinander verbunden sind. In beide Platten 13 und 14 sind Kanäle 16 und Steg 17 eingearbeitet, die der Führung eines Kühlmediums dienen. Ferner sind an der Platte 14 Vorsprünge 18 festgelegt, die mit den Hohlräumen 12 zur Herstellung des Verzehrgutes zusammenwirken. Auch in diesen Vorsprüngen 18 wird das Kühlmedium geführt. Ferner ist gestrichelt ein Temperatursensor 19 angedeutet, mit dem die Temperatur des Stempels 5 und insbesondere der Vorsprünge 18 ermittelt werden kann.

Von einer Unterfläche 20 der Platte 14 ragen desweiteren Druckstifte 21.1 und 21.2 ab, welche in Schliesslage des Werkzeuges 10 auf eine Oberfläche 22 der Form 9 drücken. Damit wird die Form 9 auf das Endlosband 8 gedrückt und Verwerfungen der Form 9 ausgeglichen.

Die Funktionsweise der vorliegenden Erfindung ist folgende:

Eine Form 9 wird beispielsweise linksseitig in Figur 1 auf das Endlosband 8 aufgelegt. Neben dem Endlosband 8 läuft bevorzugt eine Kette 23, an der Vorschubstifte 24 vorgesehen sind. Diese Vorschubstifte 24 ragen über das Endlosband 8 hinaus und nehmen die Form 9 mit.

Der Schlitten 3 befindet sich in Figur 1 soweit wie möglich links. Sobald die Form 9 auf dem Tisch 6 angekommen ist, wird der Stempel 5 mittels der Hubeinrichtung 7 abgesenkt, die Vorsprünge 18 greifen in die Hohlräume 12 ein, wobei die Masse des Verzehrgutes sich in dem verbleibenden Hohlraum verteilt. Gleichzeitig drücken die Druckstifte 21.1 und 21.2 auf die Form 9, so dass mögliche Verwerfungen der Form 9 ausgeglichen sind.

Nunmehr fährt der Schlitten 7 mit dem Endlosband 8 mit, wobei gleichzeitig das Verzehrgut in gewünschter Weise temperiert wird.

Sobald der Schlitten 7 in Figur 1 rechtsseitig angekommen ist, wird der Stempel 5 angehoben und die Form 9 freigegeben, die nunmehr aus dem Gehäuse 11 auslaufen kann.

### Positionszahlenliste

| | | | | | |
|---|---|---|---|---|---|
| 1 | Maschinenrahmen | 34 | | 67 | |
| 2 | Führungssäulen | 35 | | 68 | |
| 3 | Schlitten | 36 | | 69 | |
| 4 | Pfeil | 37 | | 70 | |
| 5 | Stempel | 38 | | 71 | |
| 6 | Tisch | 39 | | 72 | |
| 7 | Hubeinrichtung | 40 | | 73 | |
| 8 | Endlosband | 41 | | 74 | |
| 9 | Form | 42 | | 75 | |
| 10 | Werkzeug | 43 | | 76 | |
| 11 | Gehäuse | 44 | | 77 | |
| 12 | Hohlraum | 45 | | 78 | |
| 13 | Platte | 46 | | 79 | |
| 14 | Platte | 47 | | | |
| 15 | Schrauben | 48 | | | |
| 16 | Kanal | 49 | | | |
| 17 | Steg | 50 | | | |
| 18 | Vorsprung | 51 | | | |
| 19 | Temperatursensor | 52 | | | |
| 20 | Unterfläche | 53 | | | |
| 21 | Druckstift | 54 | | | |
| 22 | Oberfläche | 55 | | | |
| 23 | Kette | 56 | | | |
| 24 | Vorschubstifte | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | X | Hubrichtung |
| 32 | | 65 | | | |
| 33 | | 66 | | | |

## Patentansprüche

1. Verfahren zum Herstellen von Verzehrgütern mit einer äusseren Schale aus einer fliessfähigen Masse, welche in eine Form eingefüllt wird, wobei in die Form (9) ein temperierter Stempel (5) eintaucht und die Masse fliesspresst,
**dadurch gekennzeichnet,**
**dass** die mit der äusseren Schale in Kontakt kommenden Flächen des Stempels beschichtet werden, **wobei die Beschichtung aus Silber oder einer Silberlegierung besteht**.

2. Verfahren nach Anspruch 1, **dadurch gekennzeichnet, dass** die in Kontakt mit der äusseren Schale des Verzehrgutes kommenden Flächen galvanisch mit einer Hartsilberschicht versehen werden.

3. Verfahren nach Anspruch 1 oder 2, **dadurch gekennzeichnet, dass** zumindest der Stempel (5) und/oder die Form (9) aus einem Grundkörper aus im wesentlichen Kupfer besteht.

4. Vorrichtung zum Herstellen von Verzehrgütern mit einer äusseren Schale aus einer fliessfähigen Masse in einer Form (9), in die ein temperierter Stempel (5) eintaucht und die Masse fliesspresst, **dadurch gekennzeichnet, dass** die mit der äusseren Schale in Kontakt kommenden Flächen des Stempels beschichtet sind, **wobei die Beschichtung aus Silber oder einer Silberlegierung besteht**.

5. Vorrichtung nach Anspruch 4, **dadurch gekennzeichnet, dass** die in Kontakt mit der äusseren Schale des Verzehrgutes kommenden Flächen galvanisch mit einer Hartsilberschicht versehen sind.

6. Vorrichtung nach Anspruch 4 oder 5, **dadurch gekennzeichnet, dass** der Stempel (5) und/oder die Form (9) aus einem Grundkörper aus im wesentlichen Kupfer besteht.

7. Vorrichtung nach wenigstens einem der Ansprüche 4 bis 6, **dadurch gekennzeichnet, dass** der Stempel (5) und/oder die Form (9) in einem geschlossenen Gehäuse (11) angeordnet sind.

8. Vorrichtung nach wenigstens einem der Ansprüche 4 bis 7, **dadurch gekennzeichnet, dass** der Taupunkt der das Verzehrgut umgebenden Atmosphäre unter der Temperatur des Stempels (5) gehalten ist.

## Claims

1. Method of manufacturing edible products having an outer shell of a free-flowing substance that is introduced into a mould, wherein a temperature-controlled punch (5) engages into the mould (9) and flow-moulds the substance,
**characterized in**
**that** the surfaces of the punch that come into contact with the outer shell are coated, the coating consisting of silver or a silver alloy.

2. Method according to claim 1, **characterized in that** the surfaces that come into contact with the outer shell of the edible product are electroplated with a hard silver layer.

3. Method according to claim 1 or 2, **characterized in that** at least the punch (5) and/or the mould (9) comprises a basic body made substantially of copper.

4. Device for manufacturing edible products having an outer shell of a free-flowing substance in a mould (9), into which a temperature-controlled punch (5) engages and flows-moulds the substance, **characterized in that** the surfaces of the punch that come into contact with the outer shell are coated, the coating consisting of silver or a silver alloy.

5. Device according to claim 4, **characterized in that** the surfaces that come into contact with the outer shell of the edible product are electroplated with a hard silver layer.

6. Device according to claim 4 or 5, **characterized in that** the punch (5) and/or the mould (9) comprises a basic body made substantially of copper.

7. Device according to at least one of claims 4 to 6, **characterized in that** the punch (5) and/or the mould (9) are disposed in a closed housing (11).

8. Device according to at least one of claims 4 to 7, **characterized in that** the dew point of the atmosphere surrounding the edible product is kept below the temperature of the punch (5).

## Revendications

1. Procédé de fabrication d'articles de consommation pourvus d'une coquille extérieure à partir d'une masse apte à l'écoulement qui est versée dans un moule, dans le moule (9) plongeant un poinçon thermostatisé (5) et extrudant la masse,
**caractérisé par le fait**
**que** les faces du poinçon entrant en contact avec la coquille extérieure sont revêtues, le revêtement étant en argent ou en un alliage d'argent.

2. Procédé selon la revendication 1, **caractérisé par le fait que** les faces entrant en contact avec la coquille extérieure de l'article de consommation sont pourvues galvaniquement d'une couche d'argent dur.

3. Procédé selon au moins l'une des revendications 1 ou 2, **caractérisé par le fait qu'**au moins le poinçon (5) et/ou le moule (9) consiste en un corps de base substantiellement en cuivre.

4. Dispositif de fabrication d'articles de consommation avec une coquille extérieure à partir d'une masse apte à l'écoulement dans un moule (9) dans lequel plonge un poinçon thermostatisé (5) qui extrude la masse, **caractérisé par le fait que** les faces du poinçon entrant en contact avec la coquille extérieure sont revêtues, le revêtement étant en argent ou en un alliage d'argent.

5. Dispositif selon la revendication 4, **caractérisé par le fait que** les faces entrant en contact avec la coquille extérieure de l'article de consommation sont pourvues galvaniquement d'une couche d'argent dur.

6. Dispositif selon l'une des revendications 4 ou 5, **caractérisé par le fait qu'**au moins le poinçon (5) et/ou le moule (9) consiste en un corps de base substantiellement en cuivre.

7. Dispositif selon au moins l'une des revendications 4 à 6, **caractérisé par le fait que** le poinçon (5) et/ou le moule (9) sont disposés dans un boîtier fermé (11).

8. Dispositif selon au moins l'une des revendications 4 à 7, **caractérisé par le fait que** le point de rosée de l'atmosphère entourant l'article de consommation est maintenu au-dessous de la température du poinçon (5).
